# EUROPÄISCHE PATENTSCHRIFT

(11) **EP 2 984 445 B1**
(45) Veröffentlichungstag und Bekanntmachung des Hinweises auf die Patenterteilung: **31.05.2017**
(21) Anmeldenummer: 14731574.1
(22) Anmeldetag: 11.06.2014
(51) Int. Cl.: G01B 11/25

(54) **DYNAMIKERHÖHUNG BEI DER FARBKODIERTEN TRIANGULATION**
INCREASE IN DYNAMICS IN COLOR-CODED TRIANGULATION
AUGMENTATION DE LA DYNAMIQUE LORS DE LA TRIANGULATION À CODES DE COULEURS

(30) Priorität: 21.06.2013 DE 102013211802
(43) Veröffentlichungstag der Anmeldung: 17.02.2016
(73) Patentinhaber: Siemens Aktiengesellschaft, 80333 München (DE)
(72) Erfinder: EULER, Helmuth, 85625 Glonn (DE); RENTSCHLER, Peter, 75382 Neuhengstett (DE); SCHICK, Anton, 84149 Velden (DE)
(86) Internationale Anmeldenummer: PCT/EP2014/062134
(87) Internationale Veröffentlichungsnummer: WO 2014/202442

(56) Entgegenhaltungen:
- EP-A1- 0 076 866
- US-A1- 2012 229 816
- JIAHUI PAN: "Color-coded binary fringe projection technique for 3-D shape measurement", OPTICAL ENGINEERING, Bd. 44, Nr. 2, 1. Februar 2005 (2005-02-01), Seite 023606, XP055142979, ISSN: 0091-3286, DOI: 10.1117/1.1840973
- ZONGHUA ZHANG ET AL: "Snapshot color fringe projection for absolute three-dimensional metrology of video sequences", APPLIED OPTICS, OPTICAL SOCIETY OF AMERICA, WASHINGTON, DC; US, Bd. 49, Nr. 31, 1. November 2010 (2010-11-01), Seiten 5947-5953, XP001558354, ISSN: 0003-6935, DOI: 10.1364/AO.49.005947

## Beschreibung

Die Erfindung betrifft eine Anordnung zur Vermessung der Oberfläche eines Objektes mittels farbkodierter Triangulation.

Optische Triangulationsmethoden werden vielseitig eingesetzt, um Oberflächen oder die gesamte geometrische Form von dreidimensionalen Objekten berührungsfrei zu vermessen. Allgemein ist Triangulation eine geometrische Methode der optischen Abstandsmessung durch Winkelmessung innerhalb von Dreiecken. Die Berechnung erfolgt hierbei mittels trigonometrischer Funktionen. Generell werden passive und aktive Triangulationsverfahren unterschieden. Aktive Verfahren besitzen im Gegensatz zu passiven eine Projektoreinheit, die strukturiertes Licht auf die Oberfläche eines Objektes projiziert. Die Projektoreinheit kann ein Projektor oder ein Laser bzw. eine Laserdiode sein. Nach dem Stand der Technik wird Licht auf die Oberfläche eines zu vermessenden Objektes projiziert. Das Streulicht wird anschließend unter einem festen Winkel, dem Triangulationswinkel, mittels einer Kamera aufgenommen und analysiert. Die Verbindungslinie von Lichtquelle zu Kamera sowie die beiden Lichtstrahlen von und zum zu vermessenden Objekt spannen ein Dreieck auf, so dass bei bekanntem Abstand von Lichtquelle und Kamera und bekannter Strahlrichtungen der Abstand von Kamera und Objekt ermittelt werden kann.

Bei der dreidimensionalen Vermessung mittels farbkodierter Triangulation wird typischerweise ein Muster aus Farbstreifen, das beispielsweise mittels eines Dias erzeugt wird, unter einer vorgegebenen Strahlrichtung auf das zu vermessende Objekt projiziert. Vorteilhaft ist, dass räumliche Positionen im Projektor auf der Objektoberfläche farblich kodiert dargestellt werden. Unter einem festen Winkel wird anschließend das farbige Streulicht mittels einer Kamera analysiert. Durch die gekrümmte Form der Objektoberfläche erfahren die Farbstreifen eine ortsabhängige Phasenverschiebung, aus der letztendlich die Form der Oberfläche bestimmt werden kann. Jedoch unterliegen die Farbstreifen im Abbild des Streulichtes Helligkeitsmodulationen, die sich aus einer lokal farbabhängigen Absorption und Reflektivität an der Objektoberfläche ergeben. Desweiteren findet stets eine Überlagerung mit dem meist farbigen Licht der Umgebung statt. So kann es beispielsweise im Abbild zu einer Verschiebung der Farben im Farbraum kommen oder die einzelnen Farben lassen sich durch den Verlust an Helligkeit nunmehr schwer erkennen. Nach dem Stand der Technik wird versucht mit HDR-Kameras diesen Dynamikverlust zu kompensieren. Insbesondere für medizinische Anwendungen ist es bisher aufgrund der schnellen Objektbewegungen jedoch nicht möglich diese Technologie zu nutzen.

Auf Seiten der Kamera werden nach dem Stand der Technik Bildsensoren mit einem vorgeschalteten Bayer-Sensor verwendet. Der Bayer-Sensor weist hierbei drei empfindliche Spektralbereiche auf, die meist im Blauen, Grünen und Roten liegen. So kann das farbige Licht des Abbildes der Objektoberfläche, bevor es auf die photosensitiven Flächen des Bildsensors der Kamera trifft, nach Farben spektral gefiltert werden. Allerdings ist die Anordnung zur Bestimmung der Farbe sehr ungenau, da es bei einem Bayer-Sensor bekanntermaßen zu einem Übersprechen der Farben kommen kann. Alternativ zu Kameras mit Bayer-Sensor können auch 3-Chip-Kameras verwendet werden, deren Farbtrennung im Vergleich etwas besser ist. Die unscharfe Selektion bzw. Trennung der Farben führt in Konsequenz zu Messabweichungen bei der Bestimmung der dreidimensionalen Form des zu vermessenden Objektes. Beispielsweise kann bei einem projizierten roten Streifen durch eine Überlappung der empfindlichen Bereiche des Bayer-Sensors auch ein grünes Signal entstehen. Bei Objektoberflächen, die eine hohe Kontrastdynamik aufweisen, führt dies zu einer fehlerhaften Auswertung der Farbe eines Streifens und somit zu fehlenden Oberflächenbereichen, die möglicherweise durch Mehrfachscans unter verschiedenen Triangulationswinkeln aufgefüllt werden müssen.

In "Color-coded binary fringe projection technique for 3-D shape measurment", Optical Enineering, Bd. 44, Nr. 2, Seite 023606 (XP055142979) wird eine farbcodierte Triangulation vorgeschlagen, bei der eine CCD-Kamera mit angepassten Farbfiltern zur Aufnahme verwendet wird. Durch die angepassten Farbfilter kann ein Übersprechen verschiedener Farben nahezu verhindert werden.

Die US 2012/229816 A1 offenbart eine farbcodierte Triangulation, bei der eine zur Aufnahme vorgesehene Kamera einen angepassten Interferenzfilter umfasst, wobei mittels des Interferenzfilters verschiedene Wellenlängen vor der Aufnahme räumlich selektiert werden.

Die Aufgabe der vorliegenden Erfindung ist es, eine Anordnung zur Triangulation zu schaffen, die eine robuste Trennung von Spektralbereichen bei der Analyse eines Abbildes eines auf die Oberfläche eines zu vermessenden Objektes projizierten Farbmusters ermöglicht.

Die Aufgabe wird durch eine Anordnung mit den Merkmalen des unabhängigen Anspruches gelöst. In davon abhängigen Ansprüchen sind vorteilhafte Ausgestaltungen und Weiterbildungen der Erfindung angegeben.

Die erfindungsgemäße Anordnung umfasst eine Projektoreinheit und wenigstens eine Kamera mit einem Kamera-Sensor, wobei die Projektoreinheit ein Farbmuster auf eine Oberfläche eines zu vermessenden Objektes projiziert. Die Kamera dient zur Aufnahme eines Abbildes des auf die Oberfläche projizierten Farbmusters. Der Kamera-Sensor ist in einem ersten, in wenigstens einem zweiten und einem dritten Spektralbereich für Licht durchlässig bzw. empfindlich, wobei die empfindlichen Spektralbereiche nach ansteigenden Wellenlängen geordnet sind. Weiterhin umfasst die Anordnung einen Farbfilter, der in einem ersten, in wenigstens einem zweiten und einem dritten spektralen Durchlassbereich durchlässig ist, wobei die einzelnen spektralen Durchlassbereiche des Farbfilters paarweise disjunkt sind. Eine obere Kantenwellenlänge des ersten spektralen Durchlassbereiches liegt im ersten empfindlichen Spektralbereich des Kamera-Sensors. Eine untere und obere Kantenwellenlänge des wenigstens einen zweiten spektralen Durchlassbereiches liegen in einem zweiten empfindlichen Spektralbereich des Kamera-Sensors und eine untere Kantenwellenlänge des dritten spektralen Durchlassbereiches liegt im dritten empfindlichen Spektralbereich des Kamera-Sensors.

Der Kamera-Sensor kann eine Mehrzahl von zweiten empfindlichen Spektralbereichen aufweisen. Auch der Farbfilter kann eine Mehrzahl von zweiten Durchlassbereichen umfassen. Hierbei liegt die untere und obere Kantenwellenlänge der zweiten Durchlassbereiche in jeweils einem der zweiten Spektralbereiche des Kamera-Sensors. Zweckmäßig sind Kamera-Sensoren mit vier empfindlichen Spektralbereichen, so dass zwei zweite Spektralbereiche vorliegen. Die zwei zweiten Spektralbereiche liegen somit spektral zwischen dem ersten und dritten Spektralbereich des Kamera-Sensors.

In einer vorteilhaften Ausgestaltung ist der Farbfilter so angebracht, dass das farbige Licht des Abbildes der Oberfläche zunächst den Farbfilter und anschließend den Kamera-Sensor, insbesondere einen Bayer-Sensor, durchläuft.

Der Farbfilter weist wenigstens drei paarweise disjunkte spektrale Durchlassbereiche auf, die vorteilhafterweise im grünen, blauen und roten Lichtspektrum liegen. Vorteilhaft ist es, die spektralen Durchlassbereiche schmalbandig mit einer hohen Kantensteilheit zu gestalten.

Unter dem Durchlassbereich des Farbfilters ist derjenige spektrale Bereich zu verstehen, der durch eine untere und obere Kantenwellenlänge begrenzt ist. Die oberen und unteren Kantenwellenlängen sind die Wellenlängen, bei der die Transmission des Farbfilters jeweils auf die Hälfte der maximalen Transmission gesunken ist. Die untere Kantenwellenlänge weist hierbei eine kleinere Wellenlänge als die obere Kantenwellenlänge auf. Typischerweise wird der Durchlassbereich des Farbfilters auch als Halbwertsbreite bezeichnet.

Vorteilhafterweise kann durch die spektrale Lage der Kantenwellenlängen der Durchlassbereiche, in Bezug auf die empfindlichen Spektralbereiche des Kamera-Sensors, eine transmittierte Farbe des Abbildes robust einem spektralen Durchlassbereich und somit eindeutig einem empfindlichen Spektralbereich des Kamera-Sensors zugeordnet werden. Besonders vorteilhaft ist, dass dadurch ein Übersprechen der Farben bei der Aufnahme mit der Kamera verhindert werden kann, so dass sich die Messgenauigkeit als auch der Dynamikbereich erhöht. Zweckmäßig ist, dass Wellenlängenbereiche, die sich beim Kamera-Sensor überlappen durch die Verwendung des Farbfilters bei der Aufnahme nicht berücksichtigt werden. Beispielsweise lassen sich dadurch die Grundfarben Blau, Grün und Rot als auch Sekundärfarben wie Cyan, Magenta und Weiß gut trennen. In den Bereichen außerhalb der spektralen Durchlassbereiche des Farbfilters ist es zweckmäßig, dessen Transmission auf wenigstens 3% zu begrenzen. Besonders zweckmäßig ist eine Begrenzung der Transmission auf kleiner gleich 1%.

Der spektrale Abstand gegenüberliegender Kantenwellenlängen kann in einer vorteilhaften Ausgestaltung wenigstens 10 nm betragen. Dadurch wird eine hohe Lichteffizienz ermöglicht. Besonders vorteilhaft sind 30 nm. Dadurch wird eine gute spektrale Trennung erreicht, so dass die Farben robust erkannt bzw. getrennt werden können.

Eine vorteilhafte Ausgestaltung verwendet einen Farbfilter, dessen erster spektraler Durchlassbereich unterhalb von 480 nm im blauen Spektralbereich liegt, dessen wenigstens einer zweiter spektraler Durchlassbereich im grünen zwischen 520 nm und 565 nm liegt und dessen dritter spektraler Durchlassbereich im roten Lichtspektrum oberhalb von 600 nm liegt. Dadurch beträgt der spektrale Abstand gegenüberliegender Kantenwellenlänge mehr als 30 nm, so dass eine eindeutige Zuordnung der Farbe ermöglicht wird. Ferner befinden sich die Durchlassbereiche jeweils innerhalb der empfindlichen Spektralbereiche eines typischen Kamera-Sensors. Die spektralen Durchlassbereiche des Farbfilters sind somit an einen typischen Kamera-Sensor, insbesondere an einen typischen Bayer-Sensor, angepasst. Vorteilhaft ist, dass Farbfilter und Kamera-Sensor in Kombination wie ein optimierter Kamera-Sensor wirken, der eindeutig getrennte empfindliche Spektralbereiche aufweist. Besonders vorteilhaft ist, dass Wellenlängenbereiche, die sich bei einem typischen Kamera-Sensor überlappen, beispielsweise bei einer 3-Chip-Kamera, nicht berücksichtigt werden. Dadurch wird die Erkennungssicherheit der Farben erhöht.

Erfindungsgemäß umfasst die Projektoreinheit den Farbfilter. Dadurch kann das von der Projektoreinheit ausgehende Licht vor dem Auftreffen auf der Oberfläche eines zu vermessenden Objektes spektral aufbereitet werden.

Der Farbfilter ist erfindungsgemäß in der Projektoreinheit zwischen einer Lichtquelle und einem Dia mit Farbmuster angebracht. Dadurch wird das Licht der Lichtquelle bereits vor dem Dia mit Farbmuster spektral aufbereitet, so dass eine robuste Zuordnung der Farben durch den Kamera-Sensor möglich ist. In einer besonders vorteilhaften Ausgestaltung ist ein zweiter Farbfilter innerhalb des Gehäuses der Kamera angebracht, so dass vor der Projektion des Farbmusters auf das Objekt und vor der Detektion des Abbildes mit der Kamera jeweils eine Filterung der Farben stattfindet. Dadurch wird der Einfluss von farbigem Umgebungslicht auf die Erkennungsicherheit der Farben vermindert.

Die Lichtquelle der Projektoreinheit kann als Laserlichtquelle mit wenigstens einem Laser ausgebildet sein. In einer vorteilhaften Ausgestaltung befindet sich die Wellenlänge des Lasers in einem spektralen Durchlassbereich des Farbfilters.

Dadurch wird der Farbfilter in der robusten spektralen Trennung der Farben unterstützt.

Die Lichtquelle der Projektoreinheit kann drei Laserlichtquellen umfassen, deren Wellenlängen im blauen, grünen und rotem Lichtspektrum liegen. Vorteilhafterweise liegt die Wellenlänge der blauen Laserquelle innerhalb des ersten spektralen Durchlassbereiches des Farbfilters, die Wellenlänge der grünen Laserlichtquelle innerhalb eines zweiten spektralen Durchlassbereiches und die Wellenlänge der roten Laserquelle innerhalb des dritten spektralen Durchlassbereiches. Dadurch wird der Farbfilter in der robusten spektralen Trennung der Farben unterstützt.

Die Projektoreinheit kann als DLP-Projektor ausgebildet sein. In einer vorteilhaften Ausgestaltung wird ein im DLP-Projektor vorhandenes Farbrad durch den Farbfilter zweckgemäß ersetzt bzw. in ein vorhandenes Farbrad integriert. Dadurch werden die bei der Projektion verwendeten Farben spektral begrenzt, so dass bei der Analyse des Abbildes mit der Kamera eine robuste Zuordnung der Farben möglich ist.

Die Erfindung wird nachfolgend anhand zweier bevorzugter Ausführungsbeispiele unter Bezugnahme auf die angehängten Zeichnungen beschrieben, in denen:
- Figur 1: die empfindlichen Spektralbereiche eines Bayer-Sensors und die spektralen Durchlassbereiche des Farbfilters verdeutlicht,
- Figur 2: eine nicht erfindungsgemäße erste Ausführungsform der farbkodierten Triangulation zeigt, bei welcher der Farbfilter im Gehäuse der Kamera angebracht ist,
- Figur 3: eine zweite Ausführungsform der farbkodierten Triangulation zeigt, bei welcher der Farbfilter innerhalb der Projektoreinheit angebracht ist.

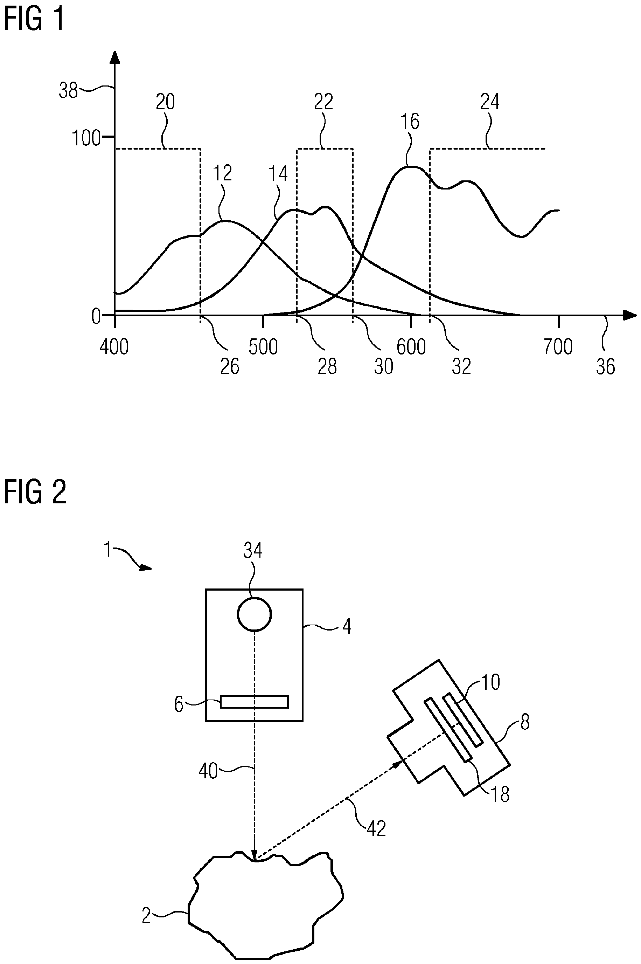

Figur 1 zeigt ein Spektrum, das die spektrale Lage eines ersten, zweiten und dritten empfindlichen Spektralbereiches 12, 14, 16 eines typischen Bayer-Sensors 10 und einen ersten, zweiten und dritten Durchlassbereich 20, 22, 24 eines Farbfilters 18 verdeutlicht. Die empfindlichen Spektralbereiche 12, 14, 16 des Bayer-Sensors 10 sind als durchgezogene Linie dargestellt, während die spektralen Durchlassbereiche 20, 22, 24 des Farbfilters 18 als gestrichelte Linien in Rechteckform dargestellt sind. Die Abszisse 36 gibt die Wellenlänge in nm an. Die Ordinate 38 gibt den Transmissionsgrad des Bayer-Sensors 10 und des Farbfilters 18 in % an. In diesem Ausführungsbeispiel liegt der erste empfindliche Spektralbereich 12 des Bayer-Sensors 10 im blauen Lichtspektrum, der zweite empfindliche Spektralbereich 14 im grünen Lichtspektrum und der dritte empfindliche Spektralbereich 16 im roten Lichtspektrum. Ein erster, zweiter und dritter spektraler Durchlassbereich 20, 22, 24 des Farbfilters 18 liegen ebenfalls im blauen, grünen und roten Lichtspektrum. Erfindungsgemäß liegt eine obere Kantenwellenlänge 26 des ersten spektralen Durchlassbereiches 20 innerhalb des ersten empfindlichen Spektralbereiches 12 des Bayer-Sensors 10. Eine obere und untere Kantenwellenlänge 28, 30 des zweiten spektralen Durchlassbereiches 22 liegen innerhalb des zweiten empfindlichen Spektralbereiches 14 des Bayer-Sensors 10. Eine untere Kantenwellenlänge 32 des dritten Durchlassbereiches 24 liegt innerhalb des dritten empfindlichen Spektralbereiches 16 des Bayer-Sensors 10. Beispielsweise liegt die obere Kantenwellenlänge 26 des ersten spektralen Durchlassbereiches 20 in der Nähe von 460 nm. Die untere und obere Kantenwellenlänge 28, 30 des zweiten spektralen Durchlassbereiches 22 liegen dann vorzugsweise in Nähe von 520 nm bzw. 560 nm und die untere Kantenwellenlänge 32 des dritten spektralen Durchlassbereiches 24 liegt in der Nähe von 610 nm. Dadurch sind die spektralen Durchlassbereiche 20, 22, 24 des Farbfilters 18 disjunkt und weisen zudem einen spektralen Abstand von in diesem Beispiel 60 nm und 50 nm auf. So wird, wenn beispielsweise Licht durch den Farbfilter 18 tritt, danach eine robuste Erkennungssicherheit der Farbe gewährleist. Zudem kann den durch den Farbfilter 18 transmittierten Farben eindeutig ein empfindlicher Spektralbereich 12, 14, 16 des Bayer-Sensors 10 zugeordnet werden. Insbesondere ist in diesem Sinne der Farbfilter 18 an den Bayer-Sensor 10 angepasst.

Figur 2 zeigt eine nicht erfindungsgemäße erste Anordnung 1 zur farbkodierten Triangulation eines zu vermessenden Objektes 2. Die Anordnung umfasst eine Projektoreinheit 4 mit einer Lichtquelle 34 und einem Dia 6. Die Lichtquelle 34 ist beispielsweise eine Weißlichtlampe und enthält somit alle Farben des Lichtspektrums. Insbesondere Blau, Grün und Rot, die vorzugsweise zu gleichen Anteilen vorliegen. Das Dia 6 weist ein Farbmuster auf, das vorzugsweise aus blauen, grünen und roten Farbstreifen besteht. Weiter umfasst die Anordnung 1 eine Kamera 8 mit einem Kamera-Sensor 10, insbesondere mit einem Bayer-Sensor. Der Farbfilter 18 ist beispielsweise innerhalb des Kameragehäuses angebracht und liegt bezogen auf eine zweite Strahlrichtung 42 vor dem Kamera-Sensor 10. Die Projektoreinheit 4 projiziert die durch das Dia 6 erzeugten Farbstreifen entlang einer ersten Strahlrichtung 40 auf die Oberfläche des zu vermessenden Objektes 2. Das entlang einer zweiten Strahlrichtung 42 gestreute Licht des Abbildes der Objektoberfläche wird von der Kamera 8 aufgenommen, nachdem es den Farbfilter 18 durchlaufen hat und auf den Kamera-Sensor 10 aufgetroffen sind. Dadurch wird das Licht des Abbildes der Objektoberfläche vor der Aufnahme durch die Kamera 8 in drei eindeutig zuordenbare Spektralbereiche eingeteilt, wobei diese zugeordneten Spektralbereiche den spektralen Durchlassbereichen 20, 22, 24 des Farbfilters 18 entsprechen.

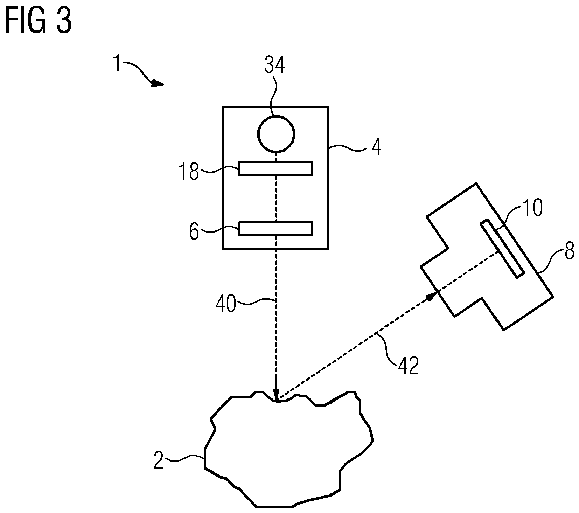

Figur 3 zeigt eine zweite Anordnung 1 zur farbkodierten Triangulation eines zu vermessenden Objektes 2. Figur 2 enthält dieselben Elemente wie Figur 3, die mit denselben Bezugszeichen versehen sind. Alternativ zu Figur 2 ist in Figur 3 der Farbfilter 18 innerhalb der Projektoreinheit 4 zwischen der Lichtquelle 34 und dem Dia 6 angebracht. Der Farbfilter 18 liegt somit bezogen auf eine erste Strahlrichtung 40 vor der Lichtquelle 18 und hinter dem Dia 6. Dadurch wird Licht, das von der Lichtquelle 34 entlang der ersten Strahlrichtung 40 ausgeht, gemäß der spektralen Durchlassbereiche 20, 22, 24 des Farbfilters 18, bereits vor der Projektion der Farbstreifen spektral aufbereitet.

## Patentansprüche

1. Anordnung (1) zur farbkodierten Triangulation eines zu vermessenden Objektes (2), umfassend eine Projektoreinheit (4) zur Projektion eines Farbmusters auf eine Objektoberfläche des zu vermessenden Objektes (2), wenigstens eine Kamera (8) mit einem Kamera-Sensor (10), zur Aufnahme eines Abbildes des auf die Oberfläche projizierten Farbmusters, wobei der Kamera-Sensor (10) in einem ersten, in wenigstens einem zweiten und einem dritten Spektralbereich (12, 14, 16) empfindlich ist, wobei die empfindlichen Spektralbereiche (12, 14, 16) nach ansteigenden Wellenlängen geordnet sind, wobei die Anordnung (1) wenigstens einen Farbfilter (18), der einen ersten, wenigstens einen zweiten und einen dritten spektralen Durchlassbereich (20, 22, 24) aufweist, wobei die spektralen Durchlassbereiche (20, 22, 24) paarweise disjunkt sind, wobei eine obere Kantenwellenlänge des ersten Durchlassbereiches (26) innerhalb des ersten empfindlichen Spektralbereiches (12) des Kamera-Sensors (10) liegt, eine untere und obere Kantenwellenlänge des wenigstens einen zweiten Durchlassbereiches (28, 30) innerhalb des wenigstens einen zweiten empfindlichen Spektralbereiches (14) liegen und eine untere Kantenwellenlänge des dritten Durchlassbereiches (32) innerhalb des dritten empfindlichen Spektralbereiches (16) des Kamera-Sensors (10) liegt,
**dadurch gekennzeichnet, dass** die Projektoreinheit (4) eine Lichtquelle (34), ein Dia (6) und den Farbfilter (18),
der innerhalb der Projektoreinheit (4) zwischen der Lichtquelle (34) und dem Dia (6) angebracht ist, umfasst.

2. Anordnung (1) nach Anspruch 1, **dadurch gekennzeichnet, dass** der spektrale Abstand gegenüberliegender Kantenwellenlängen (26, 28, 30, 32) wenigstens 10 nm, insbesondere 30 nm, beträgt.

3. Anordnung (1) nach Anspruch 1 oder 2, **dadurch gekennzeichnet, dass** der erste spektrale Durchlassbereich (20) des Farbfilters (18) unterhalb von 480 nm liegt, wenigstens ein zweiter spektrale Durchlassbereich (22) des Farbfilters (18) innerhalb des Spektralbereiches von 520 nm bis 565 nm liegt und der dritte spektrale Durchlassbereich (24) des Farbfilters (18) oberhalb von 600 nm liegt.

4. Anordnung (1) nach einem der vorhergehenden Ansprüche, **dadurch gekennzeichnet, dass** die Kamera (8) einen zweiten Farbfilter umfasst.

5. Anordnung (1) nach einem der vorhergehenden Ansprüche, **dadurch gekennzeichnet, dass** die Lichtquelle (34) der Projektoreinheit (4) als eine Laserlichtquelle ausgebildet ist und wenigstens einen Laser umfasst.

6. Anordnung (1) nach Anspruch 5 und einem der vorhergehenden Ansprüche, **dadurch gekennzeichnet, dass** die Lichtquelle (34) der Projektoreinheit (4) drei Laserlichtquellen umfasst, deren Wellenlängen im blauen, grünen und roten Lichtspektrum liegen.

## Claims

1. Arrangement (1) for color-coded triangulation of an object (2) to be measured, comprising a projector unit (4) for projecting a colour pattern onto an object surface of the object (2) to be measured, at least one camera (8) with a camera sensor (10), for recording an image of the colour pattern projected onto the surface, the camera sensor (10) being sensitive in a first, in at least one second and a third spectral range (12, 14, 16), the sensitive spectral ranges (12, 14, 16) being arranged according to increasing wavelengths, wherein the arrangement (1) comprises at least one colour filter (18) which has a first, at least one second and a third spectral transmission range (20, 22, 24), the spectral transmission ranges (20, 22, 24) being separated pairwise, an upper edge wavelength of the first transmission range (26) lying within the first sensitive spectral range (12) of the camera sensor (10), a lower and upper edge wavelength of the at least one second transmission range (28, 30) lying within the at least one second sensitive spectral range (14), and a lower edge wavelength of the third transmission range (32) lying within the third sensitive spectral range (16) of the camera sensor (10), **characterized in that** the projector unit (4) comprises a light source (34), a transparency (6) and the colour filter (18), which is fitted inside the projector unit (4) between the light source (34) and the transparency (6).

2. Arrangement (1) according to Claim 1, **characterized in that** the spectral distance of adjacent edge wavelengths (26, 28, 30, 32) is at least 10 nm, in particular 30 nm.

3. Arrangement (1) according to Claim 1 or 2, **characterized in that** the first spectral transmission range (20) of the colour filter (18) lies below 480 nm, at least one second spectral transmission range (22) of the colour filter (18) lies within the spectral range of from 520 nm to 565 nm, and the third spectral transmission range (24) of the colour filter (18) lies above 600 nm.

4. Arrangement (1) according to one of the preceding claims, **characterized in that** the camera (8) comprises a second color filter.

5. Arrangement (1) according to one of the preceding claims, **characterized in that** the light source (34) of the projector unit (4) is configured as a laser light source and comprises at least one laser.

6. Arrangement (1) according to Claim 5 and one of the preceding claims, **characterized in that** the light source (34) of the projector unit (4) comprises three laser light sources, the wavelengths of which lie in the blue, green and red light spectra.

## Revendications

1. Agencement de triangulation à code de couleurs d'un objet ( 2 ) à mesurer, comprenant une unité ( 4 ) de projection d'un modèle de couleurs sur une surface de l'objet ( 2 ) à mesurer, au moins un appareil ( 8 ) photographique, ayant un capteur ( 10 ) pour la prise de vue d'une image du modèle de couleurs projeté sur la surface, le capteur ( 10 ) étant sensible dans un premier, dans au moins un deuxième et un troisième domaines ( 12, 14, 16 ) spectraux, les domaines ( 12, 14, 16 ) spectraux sensibles étant ordonnés suivant les longueurs d'onde croissantes, l'agencement ( 1 ) ayant au moins un filtre ( 18 ) coloré, qui a un premier et au moins un deuxième et un troisième domaines ( 20, 22, 24 ) spectraux de transmission, les domaines ( 20, 22, 24 ) de transmission spectraux étant disjoints par paire, une longueur d'onde de bord supérieure du premier domaine ( 26 ) de transmission se trouvant à l'intérieur du premier domaine ( 12 ) spectral sensible du capteur ( 10 ), une longueur d'onde de bord inférieure et supérieure du au moins un deuxième domaine ( 28, 30 ) de transmission se trouvant à l'intérieur du au moins un deuxième domaine ( 14 ) spectral sensible et une longueur d'onde de bord inférieure du troisième domaine ( 32 ) de transmission se trouvant à l'intérieur du troisième domaine ( 16 ) spectral sensible du capteur ( 10 ),
**caractérisé en ce que** l'unité ( 4 ) de projection comprend une source ( 34 ) lumineuse, une diapositive ( 6 ) et le filtre ( 18 ) coloré, qui est mis à l'intérieur de l'unité ( 4 ) de projection entre la source ( 34 ) lumineuse et la diapositive ( 6 ).

2. Agencement ( 1 ) suivant la revendication 1, **caractérisé en ce que** la distance spectrale de longueurs d'onde ( 26, 28, 30, 32 ) de bords opposées est d'au moins 10 nm, notamment de 30 nm.

3. Agencement ( 1 ) suivant la revendication 1 ou 2, **caractérisé en ce que** le premier domaine ( 20 ) de transmission spectral du filtre ( 18 ) coloré est en dessous de 480 nm, au moins un deuxième domaine ( 22 ) de transmission spectral du filtre ( 18 ) coloré est dans le domaine spectral de 520 nm à 565 nm et le troisième domaine ( 24 ) de transmission spectral du filtre ( 18 ) coloré est au-dessus de 600 nm.

4. Agencement ( 1 ) suivant l'une des revendications précédentes, **caractérisé en ce que** l'appareil ( 8 ) photographique comprend un deuxième filtre coloré.

5. Agencement ( 1 ) suivant l'une des revendications précédentes, **caractérisé en ce que** la source ( 34 ) lumineuse de l'unité ( 4 ) de projection est constituée sous la forme d'une source de lumière laser et comprend au moins un laser.

6. Agencement ( 1 ) suivant la revendication 5 et l'une des revendications précédentes, **caractérisé en ce que** la source ( 34 ) lumineuse de l'unité ( 4 ) de projection comprend trois sources de lumière laser, dont les longueurs d'onde sont dans le spectre de lumière bleu, vert et rouge.
